# EUROPÄISCHE PATENTANMELDUNG

(11) **EP 3 388 722 A1**
(43) Veröffentlichungstag der Anmeldung: **17.10.2018**
(21) Anmeldenummer: 17465512.6
(22) Anmeldetag: 13.04.2017
(51) Int. Cl.: F16K 11/085, F16K 11/078

(54) **FLUIDVENTIL AUFWEISEND EINEN ERSTEN KÖRPER UND EINEN ZWEITEN KÖRPER**

(71) Anmelder: Continental Automotive GmbH, 30165 Hannover (DE)
(72) Erfinder: Paladuta, Vladimir, 307220 Giroc, jd. Timis (RO)

(57) **Zusammenfassung**

Die Erfindung betrifft ein Fluidventil (100) aufweisend einen ersten Körper (200) und einen zweiten Körper (300), der derart im ersten Körper aufgenommen ist, dass der erste Körper den zweiten Körper zumindest teilweise umschließt. Um ein verbessertes, vielseitigeres Fluidventil zu schaffen, wird vorgeschlagen, dass der zweite Körper im Wesentlichen rotationssymmetrisch ist und dass die beiden Körper korrespondierende Ausnehmungen (220, 320) derart aufweisen, dass durch eine Bewegung, welche von einem oder von beiden Körpern ausgeführt wird, wobei die Bewegung eine Rotation der beiden Körper relativ zueinander oder eine Rotation mit einer zusätzlichen Verschiebung der beiden Körper relativ zueinander ist, einander gegenüberliegende Ausnehmungen Kanäle (540) zum Fluidtransport öffnen und/oder schließen, welche durch beide Körper hindurch verlaufen.

## Beschreibung

Die Erfindung betrifft ein Fluidventil aufweisend einen ersten Körper und einen zweiten Körper, der derart im ersten Körper aufgenommen ist, dass der erste Körper den zweiten Körper zumindest teilweise umschließt

Es sind Ventile mit verschiedentlichen Verwendungszwecken bekannt, beispielsweise Sperrventile, mit denen ein Fluidkanal für einen Fluidstrom gesperrt oder freigegeben werden kann, oder Dosierventile, bei denen beispielsweise über die Variation der Ausdehnung einer Engstelle in einem Fluidkanal der hindurchströmende Fluidstrom dosiert werden kann, oder Wegeventile, mit denen auch beispielsweise die Strömungsrichtung eines Fluidstroms in einem Fluidkanal umgekehrt werden kann.

Die Anzahl der Arbeitsanschlüsse, die mittels eines Wegeventils verbunden werden können bzw. die ein Wegeventil aufweist, sind sehr begrenzt. Weiterhin ist die Anzahl der verschiedenen Schaltzustände, die mittels eines Wegeventils realisierbar sind, gering.

Eine Aufgabe der vorliegenden Erfindung ist daher, ein möglichst einfach aufgebautes Fluidventil zu schaffen, welches (mit geringem Aufwand) an die verschiedensten Anwendungsfälle anpassbar ist. Insbesondere soll eine größere Gestaltungsfreiheit und Anzahl der Arbeitsanschlüsse und/oder Schaltungsmöglichkeiten erreicht werden.

Diese Aufgabe wird durch ein Fluidventil gemäß Anspruch 1 gelöst. Ausgestaltungen und Weiterbildungen des Erfindungsgedankens sind Gegenstand von abhängigen Ansprüchen.

Das hier vorgeschlagene Fluidventil weist einen ersten Körper und einen zweiten Körper auf, der derart im ersten Körper aufgenommen ist, dass der erste Körper den zweiten Körper zumindest teilweise umschließt. Das Fluidventil zeichnet sich dadurch aus, dass der zweite Körper im Wesentlichen rotationssymmetrisch ist und dass die beiden Körper korrespondierende Ausnehmungen derart aufweisen, dass durch eine Bewegung einander gegenüberliegende Ausnehmungen Kanäle, welche durch beide Körper hindurch verlaufen, zum Fluidtransport öffnen und/oder schließen. Die Bewegung wird von einem oder von beiden Körpern ausgeführt. Dabei ist die Bewegung eine Rotation der beiden Körper relativ zueinander oder eine Rotation mit einer zusätzlichen Verschiebung der beiden Körper relativ zueinander.

Ein hier vorgeschlagenes Fluidventil kann besonders vorteilhaft in jedem Bereich der Fluidik eingesetzt werden.

Ein hier vorgeschlagenes Fluidventil verbindet besonders vorteilhaft geringen Herstellungsaufwand und geringe Herstellungskosten.

Ein hier vorgeschlagenes Fluidventil ermöglicht besonders vorteilhaft die Schaffung von beliebige Kombinationen von Einlässen und Auslässen, allgemeiner: Arbeitsanschlüssen, welche über verschiedene Anordnung von Ventilkörpern relativ zueinander realisiert werden.

Ein hier vorgeschlagenes Fluidventil ermöglicht besonders vorteilhaft eine einfache Anpassung an vielfältige Anwendungen: Der erste Körper eines Ventils kann unverändert bleiben, während verschiedene zweite Körper eingesetzt werden, welche an spezifisch an die jeweilige Anwendung angepasst ist. So können Verschaltungen, Verknüpfungen und Schaltstellungen variabel angepasst werden.

Besondere Ausführungsformen sind Gegenstand der Unteransprüche.

Ausnehmungen können beispielsweise Bohrungen, Öffnungen, Löcher, Nuten, Rinnen, Furchen, Riefen, Einschnitte, Rillen, Hohlräume, Hohlkehlen oder Schlitze sein.

Beispielsweise mit Nuten können in der Oberfläche liegende fluidische Verbindungen zwischen Ausnehmungen geschaffen werden. Beispielsweise mit Hohlräumen und Bohrungen können fluidische Verbindungen zwischen Ausnehmungen geschaffen werden, welche unter der Oberfläche liegen.

Die Fluid-Kanäle eines vorliegenden Ventils zum Fluidtransport werden ausgebildet, indem in Abhängigkeit der relativen Orientierung des zweiten Körpers zum ersten Körper derart Ausnehmungen im zweiten Körper Ausnehmungen im ersten Körper gegenüberliegen oder unmittelbar gegenüberliegen, dass die Ausnehmungen des ersten Körpers und des zweiten Körpers zusammen durch den ersten Körper und den zweiten Körper hindurch durchgehend verlaufende Fluidkanäle oder Fluidtransportkanäle ausbilden. In anderen Worten: Korrespondierend einander gegenüber liegende Ausnehmungen der verschiedenen Körper eines vorgeschlagenen Fluidventils bilden gemeinsam Kanäle aus, welche von einem Fluid durchströmt werden können. Es werden also Fluidkanäle durch beide Körper hindurch dadurch geschaffen, dass Ausnehmungen der Körper fluidisch miteinander in Verbindung stehen.

Ein hier vorgeschlagenes Fluidventil kann beispielsweise als Sperrventil oder Verteilerventil oder Wegeventil oder Verteilerstrang eingesetzt werden.

Mit einem hier vorgeschlagenen Fluidventil kann eine Kontrolle des Flusses eines Fluids ausgeübt werden.

Ein Aktuator bewegt zumindest einen der Körper des hier vorgeschlagenen Fluidventils relativ zu dem anderen Körper, um zwischen verschiedenen Anordnungen der Körper relativ zu einander zu wechseln.

Die verschiedenen Ventilstellungen bzw. Schaltstellungen eines hier vorgeschlagenen Fluidventils werden erreicht, indem ein Körper oder mehrere Körper eines hier vorgeschlagenen Fluidventils relativ zu dem oder den jeweils anderen Körpern (sowie weiteren Bestandteilen) des Fluidventils mittels Aktuator oder Aktuatoren bewegt werden. Beispielsweise kann ein Aktuator über ein Koppelglied mit einem Körper des Fluidventils verbunden sein und darüber eine Translationsbewegung oder Rotationsbewegung des Körpers bewirken. Es ist dabei denkbar, dass ein Aktuator beispielsweise in einem ersten Körper eines Fluidventils so angeordnet ist, dass der erste Körper einen zweiten Körper und den Aktuator umschließt. Weiterhin kann beispielsweise der Aktuator so mit dem ersten Körper und dem zweiten Körper verbunden sein, dass er eine Rotation des einen Körpers relativ zum anderen Körper bewirken kann.

Alternativ ist beispielsweise denkbar, dass über ein Übertragungsglied ein Körper mit einer Unterstützungsstruktur verbunden ist. Beispielsweise kann der zweite Körper eines Ventils über eine - z.B. mittels Schraubgewinde oder Verschweißen - angebrachte, starre Stange fest mit einer Unterstützungsstruktur verbunden sein. Ein Aktuator könnte dann über eine Kontaktfläche an einer Kappe des ersten Körpers den ersten Körper greifen und gegenüber dem zweiten Körper verdrehen oder verdrehen und verschieben.

Ein Übertragungsglied, das eine Bewegung von einem Aktuator an einen Körper des Ventils überträgt, kann auch beispielsweise eine Magnetkupplung sein. Hierbei kann eine Übertragung auch durch für Fluide undurchdringliche, geschlossene Körperflächen übertragen werden.

Aktuatoren können beispielsweise hydraulisch, pneumatisch, oder mechanisch ausgeführt sein. Auch ein Elektromotor kann beispielsweise ein Aktuator sein.

Über einen formschlüssigen Angriff an einem Körper kann ein Aktuator beispielsweise den Körper drehfest in eine Bewegung mitnehmen.

In seiner einfachsten Form wird ein Umschalten eines hier vorgeschlagenen Fluidventils durch eine rein rotatorische Bewegung eines Körpers des Fluidventils relativ zum jeweils anderen Körper erreicht. In einer erweiterten Ausführungsform eines hier vorgeschlagenen Fluidventils wird ein Umschalten auch durch eine rotatorische und zugleich translatorische Bewegung erreicht.

In einer beispielhaften Ausführungsform eines hier vorgeschlagenen Fluidventils bilden die Ausnehmungen in den Körpern unter verschiedenen Drehwinkeln, beispielsweise unter Winkeln von 30, 60, 90 Grad, der Körper relativ zueinander jeweils bestimmte Verknüpfungen von Einlässen und Auslässen aus. Es sind jedoch beliebige andere Winkel möglich. Bei dem Ändern des Drehwinkels kann sich auch die Fließrichtung des Fluids durch eine oder mehrere Ausnehmungen ändern, d.h. es kann sozusagen aus einer als Auslass agierenden Ausnehmung eine als Einlass agierende Ausnehmung werden oder umgekehrt. Es können auch Ausnehmungen, welchen zuvor einer geschlossenen Oberfläche im jeweils anderen Körper gegenüber lagen, fluidisch in Verbindung treten, wenn nach dem Umschalten korrespondierende Ausnehmungen gegenüber liegen. Umgekehrt können fluidische Verbindungen von Ausnehmungen sozusagen auch getrennt werden.

Ein hier vorgeschlagenes Fluidventil kann so gestaltet werden, dass es ein in einem bestimmten Bedarfsfall gewünschtes Umschalten bzw. Verschalten von Einlässen/und Auslässen (allgemeiner: Arbeitsöffnungen), welche als Ausnehmungen in den Körpern realisiert sind, leisten kann.

Durch die von einem oder von beiden Körpern ausgeführten Bewegungen relativ zum jeweils anderen Körper eines hier vorgeschlagenen Fluidventils sind alle vorgesehenen Verbindungsmöglichkeiten erreichbar.

Fluidik befasst sich mit allen zum Fließen befähigten Substanzen, d.h. auch Gasen und Flüssigkeiten. Fluidisch ist das von Fluidik abgeleitete Adjektiv.

Die Ausnehmungen an den Körpern eines hier vorgeschlagenen Fluidventils sind als universelle Arbeitsanschlüsse zu verstehen: Die Ausnehmungen können sowohl als Einlässe als auch als Auslässe agieren und auch in beiden Funktionen, beispielsweise auch in kurzer zeitlicher Abfolge, zum Einsatz kommen.

Ein erfindungsgemäßes Fluidventil kann auch mehr als fünf Arbeitsanschlüsse an einem ersten Körper aufweisen, beispielsweise zehn, 20 oder auch deutlich mehr.

Eine beispielhafte Variante eines hier vorgeschlagenen Fluidventils kann in anderen Worten beschrieben werden als ein Fluidventil aufweisend eine Anordnung von zumindest zwei Körpern, wobei ein zweiter Körper in einem ersten Körper derart aufgenommen ist, dass ein fluchtender, formschlüssiger, im Wesentlichen dichtend anliegender Kontakt zwischen den Körpern geschaffen wird, und, dass ein im wesentlichen formschlüssig anliegender Kontakt weiterhin besteht, wenn die Körper untereinander verdreht oder untereinander verdreht und zusätzlich verschoben werden, wobei beide Körper Ausnehmungen derart aufweisen, dass durch das Verdrehen oder das Verdrehen mit zusätzlichem Verschieben der Körper zueinander Fluidkanäle geöffnet oder geschlossen werden.

Ein Fluidkanal, welcher geöffnet ist, weist zumindest zwei Bestandteile auf: Ein erster Bestandteil wird von einer Ausnehmung des ersten Körpers gebildet und ein zweiter Bestandteil wird von einer Ausnehmung des zweiten Körpers gebildet. Ein Fluidkanal kann nur dann als geöffnet angesehen werden, wenn er für ein Fluid durchgängig ist, was dann der Fall ist, wenn die Ausnehmungen, die die Bestandteile des Fluidkanals ausbilden, einander so gegenüber liegen, dass sie zumindest teilweise überlappen. Ein Kanal kann als vollständig geöffnet betrachten, wenn zumindest eine der beteiligten Ausnehmungen vollständig einer Ausnehmung eines anderen Körpers gegenüber liegt.

In Ausnehmungen eines Körpers eines hier vorgeschlagenen Fluidventils eingebrachte Stopfen können entfernbare Stopfen sein. Stopfen zeichnen sich dadurch aus, dass sie Ausnehmungen am Ort, an dem Sie in Ausnehmungen eingebracht sind, für fluide undurchlässig machen. Es sind auch Stopfen denkbar, welche für eine Flüssigkeit undurchlässig, jedoch für Gase durchlässig sind.

Verschiedene Schaltstellungen des Fluidventils zeichnen sich durch verschiedene relative Anordnungen der beiden Körper zueinander aus. D.h. man gelangt von einer Ventilstellung zu einer anderen, indem man einen oder mehrere Körper des Ventils relativ zu dem oder den anderen Körpern des Ventils bewegt.

Ein zweiter Körper eines hier vorgeschlagenen Fluidventils, der derart im ersten Körper aufgenommen ist, dass der erste Körper den zweiten Körper zumindest teilweise umschließt, kann auch beispielsweise aus mehreren Teilkörpern zusammengesetzt sein. Beispielsweise kann ein im Ganzen im Wesentlichen zylindrischer zweiter Körper zusammengesetzt sein aus mehreren zylindrischen Teilkörpern, welche säulenartig einander berührend angeordnet werden, um zusammen den zweiten Körper zu ergeben. Durch mechanische Fügemittel, etwa Verstiftung mit Stiften auf einer Fläche und Ausnehmungen in der gegenüberliegenden Fläche eines benachbarten Teilkörpers, wird sichergestellt, dass der zusammengesetzte zweite Körper sich als Ganzes bewegt. Ein weiteres Beispiel für ein Fügemittel ist eine Kombination aus Nuten und Federn. Ein Aufbau des zweiten Körpers aus Teilkörpern kann vorteilhaft sein, wenn Ausnehmungen im Inneren des zweiten Körpers geschaffen werden sollen. Hier könnte man beispielsweise Ausnehmungen in Oberflächen von Teilkörpern einbringen, beispielsweise Nuten, welche im zusammengesetzten Zustand des zweiten Körpers dann zumindest teilweise innenliegend sind.

In einer vorteilhaften Ausgestaltung ist der erste Körper des Fluidventils unbeweglich angeordnet und der zweite Körper ist beweglich. Hierbei werden die verschieden Fluidkanäle des Fluidventils durch Bewegen des zweiten Körpers geöffnet oder geschlossen.

Bei einer weiteren vorteilhaften Ausgestaltung ist der zweite Körper des Fluidventils unbeweglich angeordnet und der erste Körper ist beweglich. Hierbei werden die verschieden Fluidkanäle des Fluidventils durch Bewegen des ersten Körpers geöffnet oder geschlossen.

In einer weiteren vorteilhaften Ausgestaltung sind der erste Körper und der zweite Körper des Fluidventils beweglich angeordnet. Hierbei sind verschiedene Bewegungen möglich, durch welche Fluidkanäle des Fluidventils geöffnet oder geschlossen werden. Beispielsweis können beide Körper eine zugleich oder nacheinander oder zeitlich teilweise überlappend Bewegungen ausführen. Beispielsweise können beide Körper jeweils einen Teil einer Gesamtbewegung ausführen. Im Fall einer Bewegung, welche eine Rotation mit einer zusätzlichen Verschiebung der beiden Körper relativ zueinander ist, kann beispielsweise der eine Körper die Rotation ausführen und der andere Körper die Verschiebung.

In einer vorteilhaften Ausgestaltung bilden die Ausnehmungen im ersten Körper die Arbeitsanschlüsse aus, welche beispielsweise bei der Verwendung des Ventils in Anwendungen der Fluidtechnik an ein fluidtechnisches System angeschlossen werden, wenn das Ventil in das System integriert wird.

In einer vorteilhaften Ausgestaltung bilden Ausnehmungen im zweiten Körper die Arbeitsanschlüsse aus, welche beispielsweise bei der Verwendung des Ventils in Anwendungen der Fluidtechnik an ein fluidtechnisches System angeschlossen werden, wenn das Ventil in das System integriert wird.

In einer vorteilhaften Ausgestaltung bilden sowohl Ausnehmungen im ersten Körper als auch Ausnehmungen im zweiten Körper die Arbeitsanschlüsse aus, welche beispielsweise bei der Verwendung des Ventils in Anwendungen der Fluidtechnik an ein fluidtechnisches System angeschlossen werden, wenn das Ventil in das System integriert wird.

In einer vorteilhaften Ausgestaltung weist ein hier vorgeschlagenes Fluidventil mindestens fünf Ausnehmungen auf, welche die Arbeitsanschlüsse des Ventils für fluidtechnische Anwendungen ausbilden. Ein derartiges Ventil weist also mindestens fünf Arbeitsanschlüsse auf.

In einer vorteilhaften Ausgestaltung weist ein hier vorgeschlagenes Fluidventil derart an seinem ersten Körper und an seinem zweiten Körper Ausnehmungen auf, dass dadurch mindestens fünf verschiedene Möglichkeiten zur Verknüpfung von Ausnehmungen durch Bewegung der Körper relativ zueinander erreichbar sind. In anderen Worten weist ein derartiges Fluidventil mindestens fünf verschiedene Ventilstellungen auf, welche sich durch verschiedene Verknüpfungen von Ausnehmungen - und damit auch von Arbeitsanschlüssen - unterscheiden.

In einer besonders vorteilhaften Variante eines hier vorgeschlagenen Fluidventils ist der zweite Körper im Wesentlichen von zylindrischer Gestalt. Dadurch ergeben sich als Vorteile eine günstige Herstellbarkeit bei hoher Fertigungspräzision und eine gute Herstellungsökonomie.

Bei einer besonders vorteilhaften Variante eines hier vorgeschlagenen Fluidventils ist der erste Körper im Wesentlichen als ein zylindermantelartiges Rohr mit geschlossenen Flächen an beiden Rohrenden ausgebildet. Eine derartige Ausbildung ermöglicht vorteilhafterweise eine besonders ökonomische Herstellung und kompakte Abmessungen des ersten Körpers. Bei der Fertigung eines derartigen Fluidventils kann beispielsweise ein Rohrende des ersten Körpers geschlossen sein und das andere Rohrende geöffnet. Dann wird ein zweiter Körper in den ersten Körper eingebracht und im Anschluss daran wird das noch geöffnete Rohrende geschlossen, beispielsweise indem eine Kappe daran angeordnet und beispielsweise dichtend mit dem Körper verschweißt wird.

Bei einer weiteren besonders vorteilhaften Variante weist ein hier vorgeschlagenes Fluidventil unterschiedliche Ausnehmungen derart auf, dass in jeder relativen Position des zweiten Körpers zum ersten Körper zumindest eine Ausnehmung des ersten Körpers oder des zweiten Körpers keiner Ausnehmung des jeweils anderen Körpers gegenüber steht. Dadurch entsteht der Vorteil, dass in jeder relativen Position des zweiten Körpers zum ersten Körper zumindest eine Ausnehmung keinen Fluidkanal öffnet, also kein Fluidstrom durch diese Öffnung erfolgt.

Bei einer anderen besonders vorteilhaften Variante eines hier vorgeschlagenen Fluidventils stehen in zumindest einer Position des zweiten Körpers relativ zum ersten Körper alle Ausnehmungen des ersten oder des zweiten Körpers einer Ausnehmung des jeweils anderen Körpers gegenüber stehen. Dadurch ergibt sich der besondere Vorteil, dass in einer Stellung des Fluidventils die größtmögliche Zahl von Fluidkanälen, die mit einer gegebenen Gestaltungsvariante realisierbar sind, zur Verfügung steht.

Bei einer weiteren besonders vorteilhaften Variante eines hier vorgeschlagenen Fluidventils sind eine oder mehrere Ausnehmungen mit Stopfen verschlossen. Durch die Verwendung von Stopfen zum Verschließen von Ausnehmungen wird besonders vorteilhaft ermöglicht, auch komplexere Anordnungen von Ausnehmungen bzw. Gestaltungen von Fluidventilen zu realisieren.

In einer weiteren besonders vorteilhaften Variante eines hier vorgeschlagenen Fluidventils sind die mit Stopfen verschlossenen Ausnehmungen parallel zur Drehachse des zweiten Körper verlaufende Längsbohrungen oder zylindrische Ausnehmungen. Dadurch ergibt sich der besondere Vorteil, besonders ökonomisch Ausnehmungen auch komplexerer Natur im zweiten Körper zu erstellen, mit welchen Fluidkanäle mit einem parallel zur Rotationsachse des zweiten Körpers verlaufenden Anteil ausgebildet werden können.

In einer besonders vorteilhaften Variante eines hier vorgeschlagenen Fluidventils sind die mit Stopfen verschlossenen Ausnehmungen senkrecht zur Drehachse des zweiten Körpers verlaufende Ausnehmungen. Dadurch wird besonders vorteilhaft ermöglicht, radial verlaufende Ausnehmungen, beispielsweise Bohrungen, zu realisieren und bei Bedarf wieder zu verschließen. Damit können beispielsweise im Inneren des Körpers verlaufende, nicht senkrecht zur Rotationsachse verlaufende Ausnehmungen miteinander verbunden werden, wobei die Verbindung zur Oberfläche der senkrecht zur Rotationsachse verlaufenden Ausnehmung nach Schaffung der Ausnehmung wieder geschlossen wird.

Bei einer weiteren besonders vorteilhaften Ausführungsform eines hier vorgeschlagenen Fluidventils, bei dem eine oder mehrere Ausnehmungen mit Stopfen verschlossen sind, sind zumindest zwei Stopfen mechanisch miteinander verbunden. Durch die mechanisch miteinander verbundenen Stopfen ergibt sich der Vorteil besonders schneller Montage und damit ökonomischer Herstellung eines derartigen Fluidventils. Weiterhin kann sich unabhängig davon der Vorteil ergeben, dass mittels der verbundenen Stopfen ein Aktuator an dem Körper, dessen Ausnehmungen mit diesen Stopfen verschlossen werden, angreift, und somit eine Bewegung vom Aktuator an den Körper übertragbar ist.

Bei einer weiteren besonders vorteilhaften Ausführungsform eines hier vorgeschlagenen Fluidventils sind Ausnehmungen als Nuten in der Oberfläche gestaltet. Dadurch werden besonders vorteilhaft kompakte Abmessungen eines derart gestalteten Fluidventils einerseits und eine besonders günstige Herstellung andererseits ermöglicht.

Eine weitere besonders vorteilhafte Variante eines hier vorgeschlagenen Fluidventils besteht aus mehr als zwei Körpern, wobei zumindest ein erster Körper alle weiteren Körper zumindest teilweise umschließt. Durch die Gestaltung mit mehr als zwei Körpern ergibt sich als besonderer Vorteil eine noch höhere Gestaltungsfreiheit zur Realisierung von verschiedenen Fluidkanälen und die Vielseitigkeit zur Realisierung verschiedener Schaltungen zwischen den realisierten Kanälen angeht.

Bei einer weiteren besonders vorteilhaften Ausführungsform eines hier vorgeschlagenen Fluidventils ist ein in einem ersten Körper eingeschlossener Körper aus mehreren Teilkörpern zusammengesetzt. Dadurch ergibt sich der Vorteil besonders vereinfachter Herstellung von Ausnehmungen und damit ökonomischerer Herstellung eines derartigen Fluidventils.

Bei einer weiteren besonders vorteilhaften Variante eines hier vorgeschlagenen Fluidventils bilden die Ausnehmungen des ersten Körpers die Arbeitsanschlüsse des Fluidventils aus. Hierbei ergibt sich als Vorteil, dass ein Anschließen von Leitungen an die Arbeitsanschlüsse besonders einfach möglich ist.

Bei einer weiteren besonders vorteilhaften Ausführungsform eines hier vorgeschlagenen Fluidventils weist der erste Körper mindestens vier, vorzugsweise fünf Ausnehmungen auf. Dadurch ergibt sich der Vorteil, dass ein derartiges Fluidventil mindestens vier, vorzugsweise fünf Fluidkanäle öffnen kann.

Bei einer weiteren besonders vorteilhaften Ausführungsform eines hier vorgeschlagenen Fluidventils werden mindestens fünf verschiedene Verknüpfungen von Ausnehmungen mit verschiedenen Anordnungen der zwei Körper relativ zueinander ausgebildet. Dadurch ergibt sich besonders vorteilhaft, dass ein derartiges Fluidventil mindestens fünf verschiedene Ventilstellungen, entsprechend mindestens fünf verschiedenen Schaltzuständen, einnehmen kann.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: eine Schnittzeichnung eines für das hier vorgeschlagene Fluidventil beispielhaften Fluidventils in einer isometrischen Darstellung,
- Figur 2: isometrische Darstellungen des ersten Körpers und des zweiten Körpers des in Figur 1 gezeigten Fluidventils,
- Figur 3: isometrische Ansichten von Bestandteilen des in Figur 1 gezeigten Fluidventils zur Verdeutlichung des Sitz eines Stopfens im zweiten Körper,
- Figur 4: zeigt in isometrischen Darstellungen Schnitte durch das in Figur 1 gezeigte Fluidventil in verschiedenen relativen Anordnungen der zwei Körper, wobei die in den Anordnungen jeweils geöffneten Fluidkanäle kenntlich gemacht sind,
- Figur 5: isometrische Darstellungen des ersten Körpers und des zweiten Körpers eines beispielhaften Fluidventils mit fünf Ausnehmungen im ersten Körper,
- Figur 6: eine Seitenansicht eines beispielhaften Fluidventils mit sieben Ausnehmungen im ersten Körper in einer Schnittzeichnung.

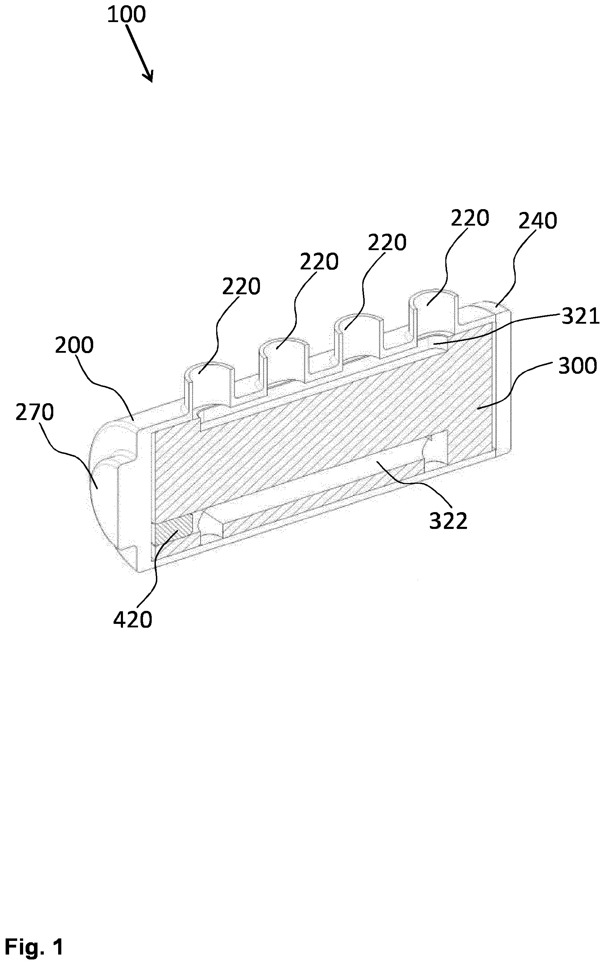

Figur 1 zeigt in einer isometrischen Darstellung eine entlang einer Schnittebene aufgeschnittene beispielhafte Ausführungsform eines hier vorgeschlagenen Fluidventils 100 mit einem ersten Körper 200 und einem zweiten Körper 300. Der zweite Körper 300 ist so in dem ersten Körper 200 aufgenommen, dass der erste Körper 200 den zweiten Körper 300 zumindest teilweise umschließt. Der erste Körper 200 weist zumindest vier Ausnehmungen 220 auf, welche in diesem Beispiel als zylindrische Bohrungen ausgeführt sind. Der Hohlraum im ersten Körper 200, in dem sich der zweite Körper 300 befindet, ist mit einer Kappe 240 verschlossen, welche ein Teil des ersten Körpers 200 ist und welche fluidisch dichtend mit dem Rest des ersten Körpers verbunden ist. Der zweite Körper 300 ist in diesem Beispiel als im Wesentlichen zylinderförmiger Vollkörper ausgeführt und weist mehrere Ausnehmungen 320 auf. Manche der Ausnehmungen 320 des zweiten Körpers 300 sind als Nuten 321 ausgeführt und manche der Ausnehmungen 320 des zweiten Körpers 300 sind als Längsbohrungen 322 parallel zur Rotationsachse des zweiten Körpers 300, in Verbindung mit Bohrungen senkrecht dazu, ausgeführt. Dabei sind manche der Ausnehmungen 320 des zweiten Körpers 300 mit Stopfen 420 verschlossen. In der gezeigten Position der beiden Körper 200, 300 relativ zueinander öffnen zumindest die zumindest vier Ausnehmungen 220 im ersten Körper 200 zusammen mit der zumindest einen Ausnehmung 321 im zweiten Körper 300, welche in dieser Position der beiden Körper 200, 300 relativ zueinander den zumindest vier Ausnehmungen 220 im ersten Körper 200 gegenüber liegt, einen verzweigten Kanal zum Fluidtransport, welcher durch beide Körper 200, 300 hindurch verläuft. In einer anderen Betrachtungsweise kann anstelle von einem verzweigten Kanal auch von mehreren Kanälen sprechen. Durch eine Rotation von einem der Körper 200, 300 zum jeweils anderen Körper 200, 300 des Fluidventils 100 werden die Positionen der Ausnehmungen 220, 320 der verschiedenen Körper 200, 300 relativ zueinander verändert und dadurch werden, je nach Position der beiden Körper 200, 300 relativ zueinander, Fluidkanäle geöffnet oder verschlossen. Es sind dabei auch Stellungen des Fluidventils 100 denkbar, in denen Ausnehmungen 220, 320 einander so gegenüberstehen, dass ihre Öffnungen nur teilweise überlappen.

Der Übersichtlichkeit der Zeichnungen halber sind bei den gezeigten Ausführungsformen des hier vorgeschlagenen Fluidventils 100 die Ausnehmungen 220 am ersten Körper 200 so gezeigt, dass sie im Wesentlichen auf einer Geraden liegen und die gleiche Öffnungsweite aufweisen, ohne jedoch das hier vorgeschlagene Fluidventil 100 auf derartige Ausführungsformen zu beschränken.

Vielmehr sind auch Ausführungsformen möglich, bei denen beliebig viele Ausnehmungen 220 in beliebiger räumlicher Anordnung am ersten Körper 200 angeordnet sind. So können sich beispielsweise Ausnehmungen 220 auch auf gegenüber liegenden Seiten oder an allen Seiten des ersten Körpers 200 finden. Ebenso gibt es Ausführungsformen des vorliegenden Fluidventils 100, bei dem Ausnehmungen 220, 320 mehrerer verschiedener Öffnungsweiten im selben Fluidventil 100 angeordnet sind. Analog ist ein hier vorgeschlagenes Fluidventil 100 auch in Bezug auf die Ausnehmungen 320 im zweiten Körper 300, deren Anordnung, Formgestaltung und Öffnungsweite nicht auf die gezeigten Varianten beschränkt zu sehen, sondern es können beliebig viele beliebig geformte beliebig weit geöffnete Ausnehmungen 320 auch im zweiten Körper 300 angeordnet sein.

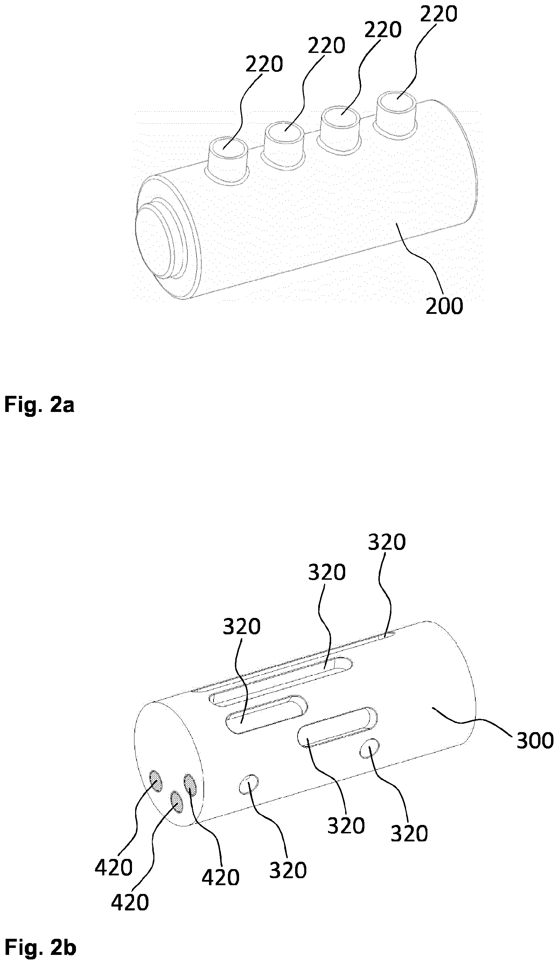

Figur 2 zeigt in der Unterteilung in Figur 2a und Figur 2b in isometrischen Ansichten Bestandteile des in Figur 1 gezeigten Fluidventils 100. Dabei zeigt Figur 2a den erste Körper 200 und Figur 2b den zweiten Körper 300.

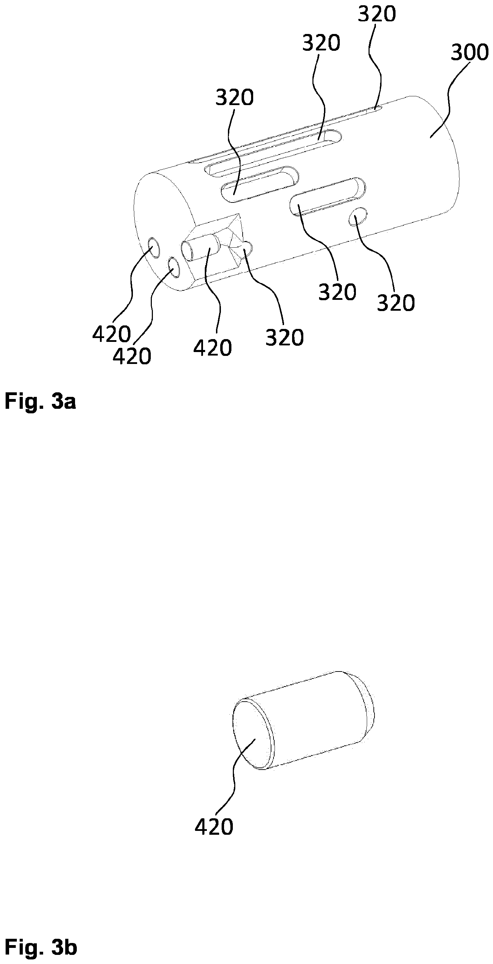

Figur 3 zeigt Unterteilung in Figur 3a und Figur 3b in isometrischen Ansichten Bestandteile des in Figur 1 gezeigten beispielhaften Fluidventils 100. Dabei zeigt Figur 3a den zweiten Körper 300, wobei ein tortenstückförmiger, dem Betrachter zugewandter Bereich des Körpers 300 nicht gezeigt ist, sodass der Blick auf einen Stopfen 420 in seinem Sitz in einer Ausnehmung 320 des zweiten Körpers 300 frei gegeben wird. Figur 3b zeigt einen beispielhaften Stopfen 420.

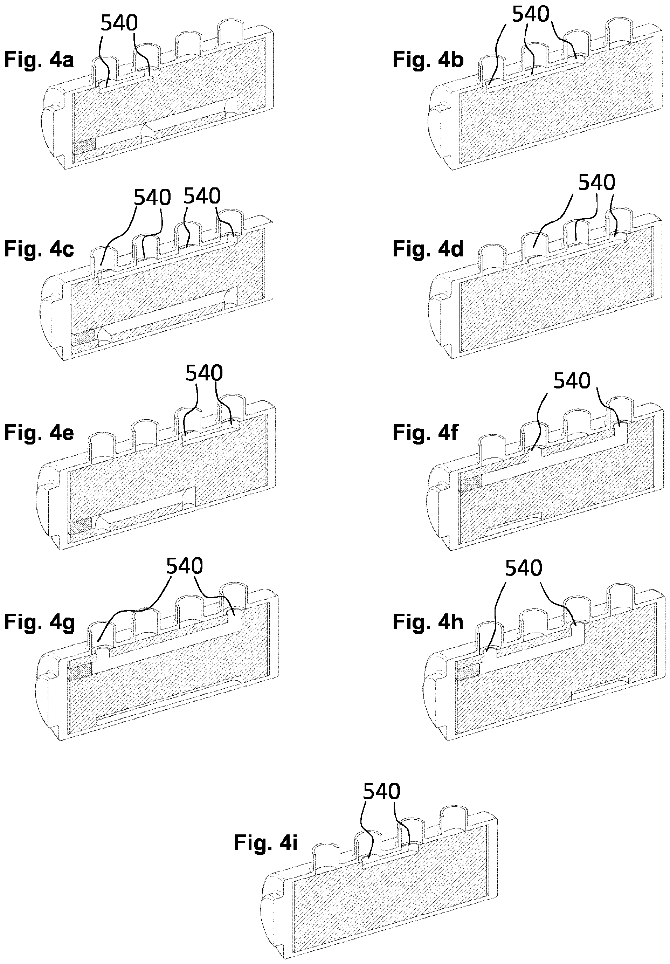

Figur 4 zeigt in isometrischen Darstellungen Schnitte durch die in den Figuren 1 bis 3 gezeigte beispielhafte Ausführungsform eines Fluidventils 100, wobei in jeder der Teilfiguren 4a bis 4i eine andere relative Anordnung der zwei Körper 200, 300 des Ventils 100 zueinander gezeigt ist. Die verschiedenen Anordnungen unterscheiden sich durch den relativen Drehwinkel der beiden Körper 200, 300 zueinander und entsprechen verschiedenen Schaltstellungen und/oder Schaltzuständen des Fluidventils 100, die durch die jeweilige Anordnung realisiert sind. Für die Beschreibung der Figuren 4a bis 4i sei angenommen, dass der zweite Körper 300 von jeweils in der gezeigten Perspektive in die Richtung gedreht wird, dass die obere Seite sich auf den Betrachter zu bewegt. Aus dieser Annahme ergeben sich die zur Beschreibung der Figuren gemachten Winkelangaben, wobei eine Drehung in die andere Richtung ebenso möglich ist. Es versteht sich von selbst, dass sich daraus abweichende Winkelangaben für verschiedene Ventilstellungen ergeben.

Bei der in Figur 4a gezeigten Stellung des gezeigten, beispielhaften Fluidventils 100 ist der zweite Körper 300 in seiner Ausgangsstellung in Bezug auf den ersten Körper 200. Das ist dieselbe Stellung, die auch einer Drehung um 360 Grad gegenüber der Ausgangsstellung entspricht. In dieser Stellung liegen den links in der Zeichnung angeordneten zwei Ausnehmungen 220 im ersten Körper 200 jeweils Ausnehmungen 320 im zweiten Körper 300 gegenüber, sodass dort zwei Fluidkanäle 540 geöffnet sind. Den anderen beiden Ausnehmungen 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4b gezeigten Stellung des Fluidventils 100 ist der zweite Körper 300 um 30 Grad gegenüber seiner Ausgangsstellung in Bezug auf den ersten Körper 200 gedreht. In dieser Stellung liegen den links in der Zeichnung angeordneten drei Ausnehmungen 220 im ersten Körper 200 jeweils Ausnehmungen 320 im zweiten Körper 300 gegenüber, sodass dort drei Fluidkanäle 540 geöffnet sind. Der anderen Ausnehmung 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4c gezeigten Stellung des Fluidventils 100 ist der zweite Körper 300 um 60 Grad gegenüber seiner Ausgangsstellung in Bezug auf den ersten Körper 200 gedreht. In dieser Stellung liegen den vier Ausnehmungen 220 im ersten Körper 200 jeweils Ausnehmungen 320 im zweiten Körper 300 gegenüber, sodass dort vier Fluidkanäle 540 geöffnet sind. Den anderen Ausnehmungen 320 des zweiten Körpers 300 liegen keine Ausnehmungen des ersten Körpers gegenüber, sodass dort keine Fluidkanäle 540 geöffnet sind.

Bei der in Figur 4d gezeigten Stellung des Fluidventils 100 ist der zweite Körper 300 um 90 Grad gegenüber seiner Ausgangsstellung in Bezug auf den ersten Körper 200 gedreht. In dieser Stellung liegen den rechts in der Zeichnung angeordneten drei Ausnehmungen 220 im ersten Körper 200 jeweils Ausnehmungen 320 im zweiten Körper 300 gegenüber, sodass dort drei Fluidkanäle 540 geöffnet sind. Der anderen Ausnehmung 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4e gezeigten Stellung des Fluidventils 100 ist der zweite Körper 300 um 120 Grad gegenüber seiner Ausgangsstellung in Bezug auf den ersten Körper 200 gedreht. In dieser Stellung liegen den rechts in der Zeichnung angeordneten zwei Ausnehmungen 220 im ersten Körper 200 jeweils Ausnehmungen 320 im zweiten Körper 300 gegenüber, sodass dort zwei Fluidkanäle 540 geöffnet sind. Den anderen Ausnehmungen 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4f gezeigten Stellung des Fluidventils 100 ist der zweite Körper 300 um 180 Grad gegenüber seiner Ausgangsstellung in Bezug auf den ersten Körper 200 gedreht. In dieser Stellung liegen der rechts in der Zeichnung angeordneten Ausnehmung 220 und der als dritte von rechts angeordneten Ausnehmung 220 der vier Ausnehmungen 220 des ersten Körpers 200 jeweils Ausnehmungen 320 im zweiten Körper 300 gegenüber, sodass dort zwei Fluidkanäle 540 geöffnet sind. Den anderen Ausnehmungen 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4g gezeigten Stellung des Fluidventils 100 ist der zweite Körper 300 um 240 Grad gegenüber seiner Ausgangsstellung in Bezug auf den ersten Körper 200 gedreht. In dieser Stellung liegen den äußeren beiden der vier Ausnehmungen 220 des ersten Körpers 200 jeweils Ausnehmungen 320 im zweiten Körper 300 gegenüber, sodass dort zwei Fluidkanäle 540 geöffnet sind. Den anderen Ausnehmungen 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4h gezeigten Stellung des Fluidventils 100 ist der zweite Körper 300 um 300 Grad gegenüber seiner Ausgangsstellung in Bezug auf den ersten Körper 200 gedreht. In dieser Stellung liegen der links in der Zeichnung angeordneten Ausnehmung 220 und der als dritte von links angeordneten Ausnehmung 220 der vier Ausnehmungen 220 des ersten Körpers 200 jeweils Ausnehmungen 320 im zweiten Körper 300 gegenüber, sodass dort zwei Fluidkanäle 540 geöffnet sind. Den anderen Ausnehmungen 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

Bei der in Figur 4i gezeigten Stellung des Fluidventils 100 ist der zweite Körper 300 um 330 Grad gegenüber seiner Ausgangsstellung in Bezug auf den ersten Körper 200 gedreht. In dieser Stellung liegen den mittleren beiden der vier Ausnehmungen 220 des ersten Körpers 200 jeweils Ausnehmungen 320 im zweiten Körper 300 gegenüber, sodass dort zwei Fluidkanäle 540 geöffnet sind. Den anderen Ausnehmungen 220 des ersten Körpers 200 und den anderen Ausnehmungen 320 des zweiten Körpers 300 liegen keine Ausnehmungen des jeweils anderen Körpers gegenüber, sodass dort keine Fluidkanäle 540 geöffnet sind.

In Figur 4 werden die Stellungen, in denen der zweite Körper 300 um 150, 210, oder 270 Grad gegenüber seiner Ausgangsstellung in Bezug auf den ersten Körper 200 gedreht ist, nicht gezeigt. In diesen Stellungen sind keine Fluidkanäle 540 geöffnet.

Auch die zwischen den in Figur 4 gezeigten Winkeln liegende Winkel sind möglich. Den gezeigten Winkeln ist gemein, dass bestimmte Fluidkanäle 540 geöffnet sind und die dabei beteiligten Ausnehmungen 220, 320 einander zentriert gegenüberliegen.

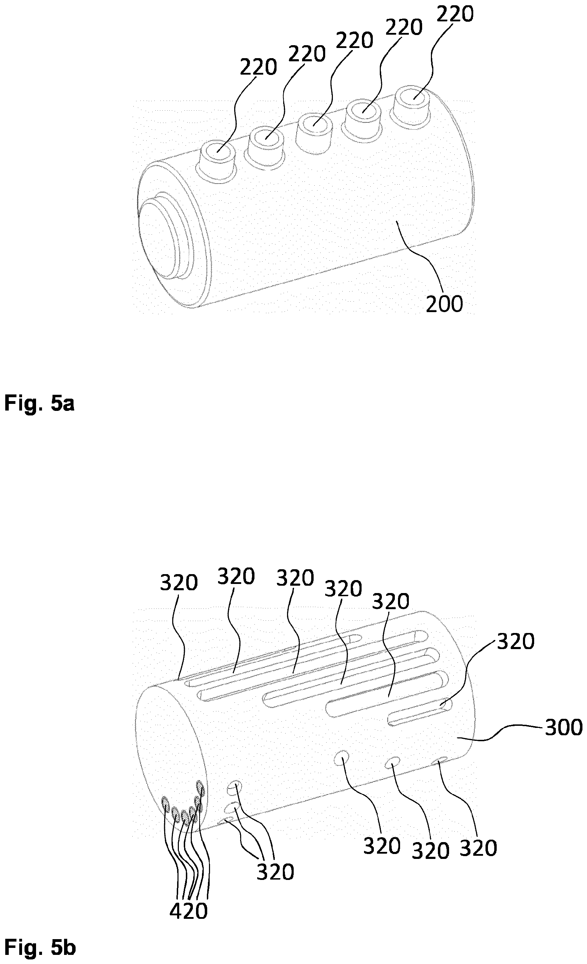

Figur 5 zeigt in Unterteilung in Figur 5a und Figur 5b in isometrischen Ansichten Bestandteile einer weiteren beispielhaften Ausführungsform eines Fluidventils 100 mit mindestens fünf Ausnehmungen 220 im ersten Körper 200. Dabei zeigt Figur 5a den erste Körper 200 und Figur 5b den zweiten Körper300. Der zweite Körper 300 weist dabei mindestens sechs zylindrische Ausnehmungen 320 auf, welche als zylindrische Ausnehmungen parallel zur Symmetrieachse bezogen auf Rotation des im Wesentlichen zylindrischen zweiten Körpers 320 ausgeführt und mit Stopfen 420 verschlossen sind. Weiterhin weist der zweite Körper 300 mindestens sechs als Nuten 321 ausgeführte Ausnehmungen 320 auf, welche parallel zur Symmetrieachse bezogen auf Rotation des zweiten Körpers 300 ausgeführt sind. Dabei ist gut zu erkennen, dass die verschiedenen als Nuten 321 ausgeführten Ausnehmungen 320 auf verschiedenen Längen parallel zur Rotationsachse ausgedehnt sind und demnach im zusammengesetzten Zustand des Ventils 100 unterschiedlichen und unterschiedlich vielen Ausnehmungen 220 des ersten Körpers 200 gegenüberliegen, somit auch unterschiedliche und/oder unterschiedlich viele Fluidkanäle 540 öffnen. Weiterhin weist der zweite Körper 300 mindestens sechs Ausnehmungen 320 auf, welche als sich radial von der äußeren Oberfläche zur Rotationsachse hin erstreckend und zylindrisch ausgeführt sind.

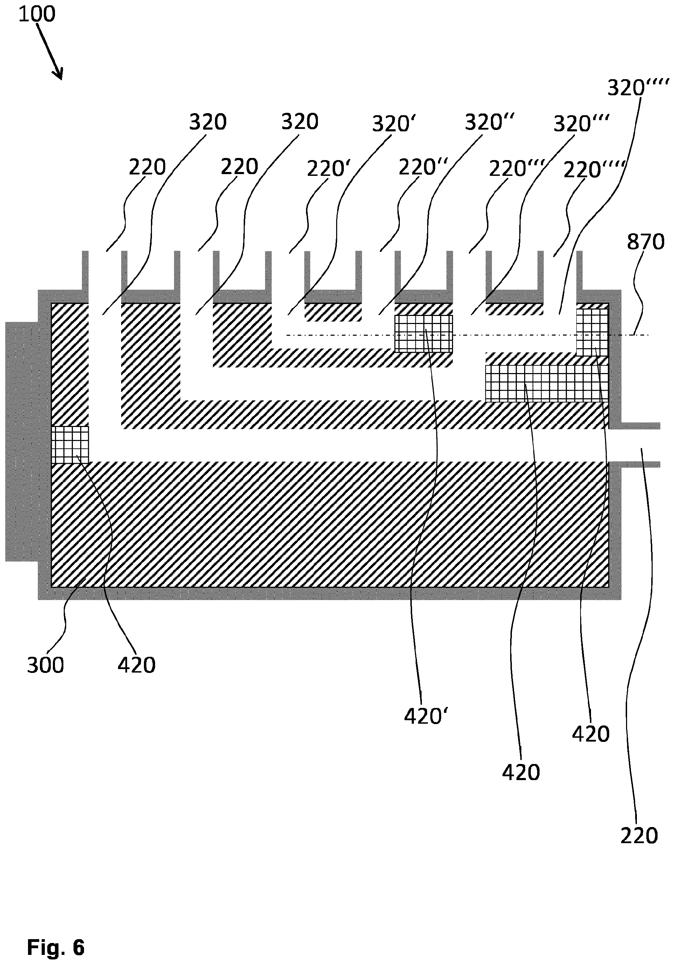

Figur 6 zeigt in einer Schnittzeichnung eine weitere beispielhafte Ausführungsform eines hier vorgeschlagenen Fluidventils 100, welche sieben Ausnehmungen 220 im ersten Körper 200 aufweist.

Hintereinander liegende Ausnehmungen können beispielsweise hergestellt werden, indem beispielsweise Bohrungen mit verschiedenen Radien erzeugt werden. Hierbei kann beispielsweise die am tiefsten ausgeführte Bohrung den geringsten Radius aufweisen. Die am zweittiefsten ausgeführte Bohrung kann dann den zweitgeringsten Radius aufweisen. Ein Stopfen 420, welcher beispielsweise auf den Radius der am zweittiefsten ausgeführten Bohrung abgestimmt ist, kann dann beispielsweise verwendet werden, um den Bereich der am tiefsten ausgeführten Bohrung von dem Bereich der am zweittiefsten ausgeführten Bohrung abzuteilen: Ein beispielhafter Stopfen 420 ist in eine Ausnehmung des zweitgeringsten Radius einbringbar, jedoch nicht in die Ausnehmung des geringsten Radius, sodass der Stopfen 420 am tiefsten Punkt der am zweittiefsten ausgeführten Bohrung angeordnet werden kann. Weitere nachfolgende Ausnehmungen können analog ausgeführt werden. Für ein derartiges Vorgehen kann es notwendig sein, dass die verschiedenen Bohrungen auf die gleiche Bohrachse zentriert sind. Zur anschaulichen Verdeutlichung ist eine derartige Achse 870 in Figur 6 illustriert: Eine Bohrung mit einem Radius ist bei der Herstellung des zweiten Körpers 300 so tief ausgeführt, dass sie in diesem Beispiel auf die Höhe von vier Ausnehmungen 320', 320", 320''', 320'''', welche in diesem Beispiel als senkrecht zur Rotationsachse des zweiten Körpers 300 verlaufende Bohrungen oder Löcher gestaltet sind, reicht. Eine zweite Bohrung auf derselben Achse wird mit einem größeren Radius als die erste Bohrung so tief ausgeführt, dass sie bis auf die Höhe von zwei der Ausnehmungen 320'' und 320'''' reicht und von der am tiefsten liegenden Ausnehmung 320 der vier Ausnehmungen 320', 320", 320''', 320'''' Abstand behält sowie die am zweittiefsten liegende Ausnehmung 320" gerade berührt, ohne jedoch davor oder hinein zu ragen. Ein erster Stopfen 420' wird nun am Ende der zweiten Bohrung platziert und ist so gestaltet, dass er nicht in die tiefste Bohrung gerät. Dadurch wird die Bohrung zwischen der am zweittiefsten liegenden Ausnehmung 320'' und der am dritttiefsten liegenden Ausnehmung 320''' versperrt. Die in der Zeichnung oben rechts gezeigte Ausnehmung 320'''' des zweiten Körpers 300 liegt einer Ausnehmung 22'''' des ersten Körpers 200 korrespondierend gegenüber. Diese beiden Ausnehmungen 220'''', 320'''' öffnen zusammen einen Fluidkanal 540. In der gezeigten Anordnung der beiden Körper 200, 300 relativ zueinander steht dieser Fluidkanal 540 im Inneren des zweiten Körpers 300 fluidisch in Verbindung mit zwei weiteren Fluidkanälen 540. Die in der Zeichnung oben gezeigten mittleren zwei der sechs oben angeordneten Ausnehmungen 220' und 220" des ersten Körpers 200 liegen den Ausnehmungen 320' bzw. 320" des zweiten Körpers 300 korrespondierend gegenüber und öffnen dadurch zwei Fluidkanäle 540, welche im Inneren des zweiten Körpers 300 fluidisch miteinander in Verbindung stehen. Dabei trennt ein Stopfen 420' den Hohlraum im inneren des zweiten Körpers 300, welcher die mittleren zwei Ausnehmungen 320', 320'' der sechs oben angeordneten Ausnehmungen 320 miteinander verbindet, von dem Hohlraum, welcher die zwei rechts in der Zeichnung gezeigten Ausnehmungen 320''', 320'''' fluidisch verbindet. Das in Figur 6 gezeigte Fluidventil 100 weist einen ersten Körper 200 mit mindestens sieben Ausnehmungen 220 auf, welche an mindestens zwei verschiedenen Seiten des Körpers 200 angeordnet sind. In der gezeigten Anordnung der Körper 200, 300 relativ zueinander sind sieben Fluidkanäle 540 geöffnet, wobei einmal drei Fluidkanäle 540 und zweimal zwei Fluidkanäle 540 jeweils fluidisch über Hohlräume im Inneren des zweiten Körpers 300 miteinander in Verbindung stehen. In der gezeigten Anordnung ergeben sich somit mindestens drei fluidische Verbindungen, welche jeweils für einen getrennten Fluidtransport genutzt werden können, weil die drei verschiedenen fluidischen Verbindungen fluidisch voneinander getrennt sind.

## Patentansprüche

1. Fluidventil aufweisend einen ersten Körper und einen zweiten Körper, der derart im ersten Körper aufgenommen ist, dass der erste Körper den zweiten Körper zumindest teilweise umschließt, **dadurch gekennzeichnet, dass** der zweite Körper im Wesentlichen rotationssymmetrisch ist und dass die beiden Körper korrespondierende Ausnehmungen derart aufweisen, dass durch eine Bewegung, welche von einem oder von beiden Körpern ausgeführt wird, wobei die Bewegung
a. eine Rotation der beiden Körper relativ zueinander oder
b. eine Rotation mit einer zusätzlichen Verschiebung der beiden Körper relativ zueinander
ist, einander gegenüberliegende Ausnehmungen Kanäle zum Fluidtransport öffnen und/oder schließen, welche durch beide Körper hindurch verlaufen.

2. Fluidventil nach Anspruch 1, wobei der zweite Körper im Wesentlichen von zylindrischer Gestalt ist.

3. Fluidventil nach Anspruch 1 oder 2, wobei der erste Körper im Wesentlichen als ein zylindermantelartiges Rohr mit geschlossenen Flächen an beiden Rohrenden ausgebildet ist.

4. Fluidventil nach einem der vorangehenden Ansprüche, welches unterschiedliche Ausnehmungen derart aufweist, dass in jeder relativen Position des zweiten Körpers zum ersten Körper zumindest eine Ausnehmung des ersten Körpers oder des zweiten Körpers keiner Ausnehmung des jeweils anderen Körpers gegenüber steht.

5. Fluidventil nach einem der vorangehenden Ansprüche, wobei in zumindest einer Stellung des zweiten Körpers relativ zum ersten Körper alle Ausnehmungen des ersten oder des zweiten Körpers einer Ausnehmung des jeweils anderen Körpers gegenüber stehen.

6. Fluidventil nach einem der vorangehenden Ansprüche, wobei eine oder mehrere Ausnehmungen mit Stopfen verschlossen sind.

7. Fluidventil nach Anspruch 6, wobei die mit Stopfen verschlossenen Ausnehmungen parallel zur Drehachse des zweiten Körper verlaufende Längsbohrungen oder zylindrische Ausnehmungen sind.

8. Fluidventil nach Anspruch 6, wobei die mit Stopfen verschlossenen Ausnehmungen senkrecht zur Drehachse des zweiten Körpers verslaufende Ausnehmungen sind.

9. Fluidventil nach einem der Ansprüche 6 - 8, wobei zumindest zwei Stopfen mechanisch miteinander verbunden sind.

10. Fluidventil nach einem der vorangehenden Ansprüche, bei dem Ausnehmungen als Nuten in der Oberfläche gestaltet sind.

11. Fluidventil nach einem der vorangehenden Ansprüche bestehend aus mehr als zwei Körpern, wobei zumindest ein erster Körper alle weiteren Körper zumindest teilweise umschließt.

12. Fluidventil nach einem der vorangehenden Ansprüche, wobei ein in einem ersten Körper eingeschlossener Körper aus mehreren Teilkörpern zusammengesetzt ist.

13. Fluidventil nach einem der vorangehenden Ansprüche, wobei die Ausnehmungen des ersten Körpers die Arbeitsanschlüsse des Fluidventils ausbilden.

14. Fluidventil nach einem der vorangehenden Ansprüche, wobei der erste Körper mindestens vier, vorzugsweise fünf Ausnehmungen aufweist.

15. Fluidventil nach einem der vorangehenden Ansprüche, wobei mindestens fünf verschiedene Verknüpfungen von Ausnehmungen mit verschiedenen Anordnungen der zwei Körper relativ zueinander ausgebildet werden.
